# EUROPÄISCHE PATENTSCHRIFT

(11) **EP 3 007 853 B1**
(45) Veröffentlichungstag und Bekanntmachung des Hinweises auf die Patenterteilung: **23.08.2017**
(21) Anmeldenummer: 14733519.4
(22) Anmeldetag: 05.06.2014
(51) Int. Cl.: B23K 26/04, B23K 26/12, B23K 26/142, B23K 26/382, B23K 26/14

(54) **VERFAHREN ZUM ENTFERNEN EINES AUF EINER WERKSTÜCKOBERFLÄCHE ABGELAGERTEN AUFWURFS BEIM BILDEN EINES DURCHGANGSLOCHS MITTELS EINES LASERSTRAHLS**
METHOD OF REMOVING A BURR FORMED ON THE SURFACE OF A WORKPIECE WHEN CREATING A THROUGHGOING HOLE BY MEANS OF A LASER BEAM
MÉTHODE D'ÉLIMINATION DES BAVURES FORMÉES SUR LA SURFACE D'UNE PIÈCE DANS UN PROCÉDÉ DE CRÉATION D'UN TROU TRAVERSANT AU MOYEN D'UN RAYON LASER

(30) Priorität: 11.06.2013 DE 102013210844
(43) Veröffentlichungstag der Anmeldung: 20.04.2016
(73) Patentinhaber: Trumpf Werkzeugmaschinen GmbH + Co. KG, 71254 Ditzingen (DE)
(72) Erfinder: SPIESS, Martin, 70839 Gerlingen (DE); MACH, Patrick, 70839 Gerlingen (DE)
(74) Vertreter: Kohler Schmid Möbus Patentanwälte
(86) Internationale Anmeldenummer: PCT/EP2014/001532
(87) Internationale Veröffentlichungsnummer: WO 2014/198394

(56) Entgegenhaltungen:
- JP-A- H1 190 670
- JP-A- 2001 321 975

## Beschreibung

Die Erfindung betrifft ein Verfahren zum Bilden eines Durchgangslochs in einem metallischen Werkstück mittels eines Laserstrahls und eines aus einer Prozessgasdüse austretenden Prozessgases, insbesondere Sauerstoff oder Stickstoff.

Beim Laserschneiden entstehen beim Einstechen des Laserstrahls in metallische Werkstücke Aufwürfe aus geschmolzenem und wieder erstarrendem Metall oder Metalloxid in der Umgebung des Einstichlochs, deren Ausmaße mit größer werdender Blechstärke deutlich zunehmen. Diese Anhaftungen rund um das Einstichloch stören vor allem bei zu schneidenden Innengeometrien und bei kleinen Bauteilen, bei denen die Schneidkontur zwangsläufig sehr nah an der Einstichstelle entlang verläuft. Außerdem erkennt eine Abstandssensorik des Laserbearbeitungskopfs die Aufwürfe als Störkontur und regelt die Bewegung des Laserbearbeitungskopfs weg vom Werkstück, was prozesstechnische Probleme zur Folge hat. Zur Vermeidung dieser Probleme ist es notwendig, die anhaftenden Aufwürfe auf dem Werkstück zu reduzieren oder zu vermeiden.

Aus der JP-A-2001321975 ist ein Laserbearbeitungsverfahren mit folgenden Verfahrensschritten bekannt:
Bilden eines Lochs in einer Stahlplatte durch Bestrahlen der Metallplatte mit einem Laserstrahl und durch Zuströmen eines Hilfsgases und eines zweiten Luftstroms; Bestrahlen der Metallplatte im Umfangsbereich des gebildeten Loches durch Verschieben der Fokusposition relativ zur Stahlplatte, um die Schlacke rund um das Loch zu schmelzen; und
Zuströmen eines Hilfsgases mit höherem Druck als der zweite Luftstrom, um die geschmolzene Schlacke fortzublasen.

Aus JP11090670A ist ein Einstechverfahren bekannt geworden, bei dem nach Beendigung des Einstechvorgangs die anhaftende metallische Schmelze durch kreisförmiges Umfahren des Aufwurfs mit der Düse und Wegblasen mit einem Gasstrahl mit hohem Druck entfernt wird.

Aus JP2009190064A ist ein Einstechverfahren bekannt, bei dem in einem ersten Verfahrensschritt mit Sauerstoff als Prozessgas eingestochen wird, so dass sich ein Metalloxid-Aufwurf auf der Werkstückoberfläche bildet, der weniger stark anhaftet als das geschmolzene Metall. In einem zweiten Verfahrensschritt erfolgt das Durchstechen mit Stickstoff als Prozessgas, wobei sich geschmolzenes Metall auf dem Metalloxid ablagert. Durch Abblasen mit einem Gasimpuls oder durch Überfahren des Aufwurfs mit der Düse, d. h. durch eine Kratzbewegung, wird der Aufwurf nach dem Einstechvorgang von der Werkstückoberfläche entfernt.

Der vorliegenden Erfindung stellt sich die Aufgabe, ein alternatives Verfahren zum Einstechen in metallische Werkstücke, insbesondere plattenförmige Werkstücke, mit Werkstückdicken von mehr als 10 mm anzugeben.

Diese Aufgabe wird erfindungsgemäß gelöst durch ein Verfahren zum Bilden eines Durchgangslochs in einem metallischen Werkstück mittels eines Laserstrahls und eines aus einer Prozessgasdüse austretenden Prozessgases, insbesondere Sauerstoff oder Stickstoff, mit folgenden Schritten:
a) Ausbilden eines nicht durchgehenden Einstichlochs im Werkstück durch Einstechen des Laserstrahls in das Werkstück mit dem Prozessgas;
b) Entfernen eines im Schritt a) um das Einstichloch herum auf der Werkstückoberfläche abgelagerten Aufwurfs mittels des Prozessgases und/oder eines Inertgases, dessen Gasdruck höher als im Schritt a) ist, durch Bewegen der Prozessgasdüse am Einstichloch vorbei und/oder über das Einstichloch hinweg bei ausgeschaltetem Laserstrahl; und
c) Durchstechen des Einstichlochs mit dem Laserstrahl und mit dem Prozessgas.

Beim erfindungsgemäßen Verfahren erfolgt das Reinigen der Werkstückoberfläche also, bevor der Durchstich vollendet wird, und nicht erst nach Beendigung des Durchstechvorgangs. Dies hat den Vorteil, dass beim Durchstechen der Abstand der Düse zur Werkstückoberfläche verringert werden kann, so dass der Fokuspunkt des Laserstrahls tiefer im Werkstück liegen kann. Außerdem wird die Einkopplung des Prozessgases in das Einstichloch bei geringerem Abstand der Düse zum Werkstück verbessert, so dass das Durchstechen schneller erfolgt.

Im ersten Verfahrensschritt a) des erfindungsgemäßen Einstechverfahrens erfolgt mit einem gepulsten oder kontinuierlichem Laserstrahl und mit dem Prozessgas ein nicht vollständig durch das Werkstück durchgehender Einstich in das Werkstück, der also beispielsweise maximal bis zur Hälfte der Werkstückdicke reichen soll. Der Abstand zwischen Prozessgasdüse und Werkstückoberfläche ist dabei größer gewählt als beim anschließenden Schneidprozess, um eine Verschmutzung der Prozessgasdüse zu vermeiden. Im Fall von Sauerstoff als Prozessgas bildet sich durch Reaktion des geschmolzenen Werkstückmaterials mit Sauerstoff ein vom Werkstück relativ leicht zu lösender, oxidischer Schlackeaufwurf um das Einstichloch, der nicht mit der Werkstückoberfläche verschweißt ist. Vorzugsweise liegt im Schritt a) der Fokuspunkt des Laserstrahls oberhalb der Werkstückoberfläche.

In einem optionalen Zwischenschritt kann eine "Nachoxidation" des Schlackeaufwurfs durch eine defokussierte Bestrahlung des Aufwurfs mit kleinerer Laserleistung als im Schritt a) durchgeführt werden. Dabei kann ebenfalls Sauerstoff als Prozessgas dienen. In diesem Zwischenschritt wird der Bearbeitungskopf zur Defokussierung des Laserstrahls fort von der Werkstückoberfläche nach oben verfahren, so dass der Abstand zwischen Prozessgasdüse und Werkstückoberfläche größer als im Schritt a) ist. Der Schlackeaufwurf wird durch diesen Zwischenschritt poröser, da eine Umwandlung von FeO-Anteilen in der Schlacke in Fe₂O₃ erfolgt. Es kann auch ein teilweises Abplatzen des Aufwurfs vom Werkstück eintreten.

Im nächsten Verfahrensschritt b) wird der Schlackeaufwurf insbesondere mit Stickstoff (oder einem anderen Inertgas) als Prozessgas während einer Verfahrbewegung der Prozessgasdüse vom Werkstück geblasen. Der Gasdruck ist dabei deutlich höher als im Schritt a), wobei die Druckerhöhung von Schritt a) zu Schritt b) möglichst stoßartig erfolgt. Der Laser ist während der Verfahrbewegung der Prozessgasdüse ausgeschaltet. Der Abstand zwischen Prozessgasdüse und Werkstückoberfläche ist möglichst klein eingestellt, um einen genügend hohen Gasimpuls auf den Aufwurf zum Wegblasen des Aufwurfs zu erzielen.

In einem letzten Verfahrensschritt c) des erfindungsgemäßen Verfahrens wird mit einem vorzugsweise gepulsten Laserstrahl und Stickstoff oder Sauerstoff als Prozessgas das Einstichloch vollständig durchgestochen. Der Abstand der Prozessgasdüse zur Werkstückoberfläche ist dabei vorzugsweise kleiner als im Verfahrensschritt a), so dass eine gute Einkopplung des Prozessgases in das Einstichloch erfolgt. Die Tiefe und Breite des im Verfahrensschritt a) erzeugten Einstichlochs sind vorzugsweise so gewählt, dass die beim Verfahrensschritt c) erzeugte Schmelze innerhalb des Einstichlochs verbleibt und nicht zur Werkstückoberfläche gelangt. Vorzugsweise liegt im Schritt c) der Fokuspunkt des Laserstrahls im Werkstück oder unterhalb des Werkstücks. Bei größeren Werkstückdicken können die beiden Schritte a) und b) des erfindungsgemäßen Verfahrens auch mehrmals durchlaufen werden, bis dann im Schritt c) der vollständige Durchstich erfolgt. Der Bereich der Werkstückoberfläche um das Einstichloch herum weist nach erfolgtem Durchstich keinen Aufwurf in Form von Schlacke oder anhaftender Schmelze auf. Somit können anschließend Konturen mit kleinsten Abmessungen, wie z.B. schmale Langlöcher, geschnitten werden.

Das erfindungsgemäße Verfahren kann sowohl an einer Festkörperlaser-Schneidmaschine als auch an einer Laserschneidmaschine mit CO₂-Laser umgesetzt werden und ermöglicht saubere Einstichlöcher sowie einen prozesssicheren Schnittbeginn, insbesondere bei der Bearbeitung von Werkstücken aus Aluminium oder Edelstahl mit einer Werkstückdicke von etwa 10 mm bis etwa 25 mm.

Wenn beim Verfahrensschritt c) der Fokusdurchmesser des Laserstrahls größer als beim Schritt a) ist oder während des Verfahrensschritts c) graduell vergrößert wird, erfolgt gleichzeitig mit dem Durchstechen eine Erweiterung des Einstichlochs. Dies hat den Vorteil, dass auch dann, wenn mit breiterem Fokusdurchmesser geschnitten als eingestochen wird, der Schnittbeginn aus dem vergrößerten Einstichloch prozesssicher erfolgt, da die anfallende Schmelze oder Schlacke gut nach unten aus dem Werkstück ausgetrieben wird. Das Vergrößern des Fokusdurchmessers kann beispielsweise durch Verschieben der Linsen im Bearbeitungskopf erfolgen. Alternativ oder ergänzend kann bei fasergeführtem Laserstrahl ein Umschalten des Strahlwegs zwischen dem Kern und dem Mantel einer Doppelclad-Faser erfolgen. Ein kontinuierliches Vergrößern des Fokusdurchmessers bis zum Durchmesser für den anschließenden Schneidprozess erhöht in vorteilhafter Weise die Prozesssicherheit beim Vergrößern des Durchstichlochs.

Im Verfahrensschritt Schritt b) wird die Prozessgasdüse vorzugsweise kreuzförmig über das Einstichloch bewegt, um den Aufwurf sicher zu entfernen. Die Prozessgasdüse - genauer gesagt der verfahrbare Laserbearbeitungskopf, an dem die Prozessgasdüse befestigt ist - wird nach dem Verfahrensschritt a) und ggf. nach dem Zwischenschritt vom Einstichloch fort horizontal zu einem ersten Eckpunkt verfahren. Bei dieser Verfahrbewegung oder an diesem ersten Eckpunkt wird der Bearbeitungskopf abgesenkt und danach mit dem geringeren Abstand zum Werkstück horizontal am Einstichloch vorbei zu einem zweiten Eckpunkt bewegt. Anschließend wird der Bearbeitungskopf wieder angehoben und über das Einstichloch zu einem dritten Eckpunkt verfahren. Am dritten Eckpunkt wird der Bearbeitungskopf wieder abgesenkt. Das Anheben und Absenken des Kopfes kann auch während der Verfahrbewegung erfolgen, so dass sich ein bogenförmiger Verlauf der Bewegung über das Einstichloch hinweg ergibt. Vom dritten Eckpunkt aus wird der Bearbeitungskopf parallel zur Werkstückoberfläche am Einstichloch vorbei zu einem vierten Eckpunkt verfahren. Von dort wird der Bearbeitungskopf zentral über das Einstichloch bewegt, ohne dabei wieder angehoben zu werden. Bei der Abblasbewegung der Prozessgasdüse um und über das Einstichloch ist vorzugsweise eine am Bearbeitungskopf befindliche Abstandsregelung ausgeschaltet.

Auf diese Weise entsteht eine Bewegungsfolge, bei der auf gegenüberliegenden Seiten des Einstichlochs ein Bewegen der Prozessgasdüse mit geringem Abstand zum Werkstück am Einstichloch vorbei erfolgt. Bei dieser Bewegung trifft der Gasstrahl mit hohem Druck von der Seite her auf den Aufwurf, der dadurch von der Werkstückoberfläche gelöst wird. Zusätzlich erfolgt - mit größerem Abstand der Prozessgasdüse zum Werkstück, um Beschädigungen an der Prozessgasdüse durch den Aufwurf zu verhindern - eine Bewegung der Prozessgasdüse über den Aufwurf hinweg, so dass auch eine Gaseinwirkung von oben stattfindet. Die Kombination aller drei Einwirkrichtungen ermöglicht ein prozesssicheres Entfernen des Aufwurfs. Ein eventuell noch vorhandener Aufwurfrest wird schließlich bei der Verfahrbewegung des Bearbeitungskopfes mit kleinem Düsenabstand zur Einstichlochmitte durch die Prozessgasdüse von der Blechoberfläche geschoben.

Die Erfindung betrifft in einem weiteren Aspekt auch eine Laserbearbeitungsmaschine umfassend einen Laserstrahlerzeuger, einen verfahrbaren Laserbearbeitungskopf mit einer Prozessgasdüse, aus der der Laserstrahl zusammen mit dem Prozessgas austritt, eine Einrichtung zum Einstellen des Prozessgasdrucks und eine Steuerung, die programmiert ist, die Bewegung des Laserbearbeitungskopfes und den eingestellten Prozessgasdruck der Einrichtung gemäß dem erfindungsgemäßen Einstechverfahren zu steuern.

Die Erfindung betrifft weiterhin auch ein Computerprogrammprodukt, welches Codemittel aufweist, die zum Durchführen aller Schritte des erfindungsgemäßen Einstechverfahrens angepasst sind, wenn das Programm auf einer Steuerung einer Laserbearbeitungsmaschine abläuft.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine zum Durchführen des erfindungsgemäßen Einstechverfahrens geeignete Laserschneidmaschine;
- Fign. 2a-2d: die einzelnen Verfahrensschritte des erfindungsgemäßen Einstechverfahrens; und
- Fign. 3a, 3b: eine spezielle Bewegungsabfolge des in Fig. 2c gezeigten dritten Verfahrensschritts in einer perspektivischen Ansicht (Fig. 3a) und in einer Draufsicht (Fig. 3b) auf das Werkstück.

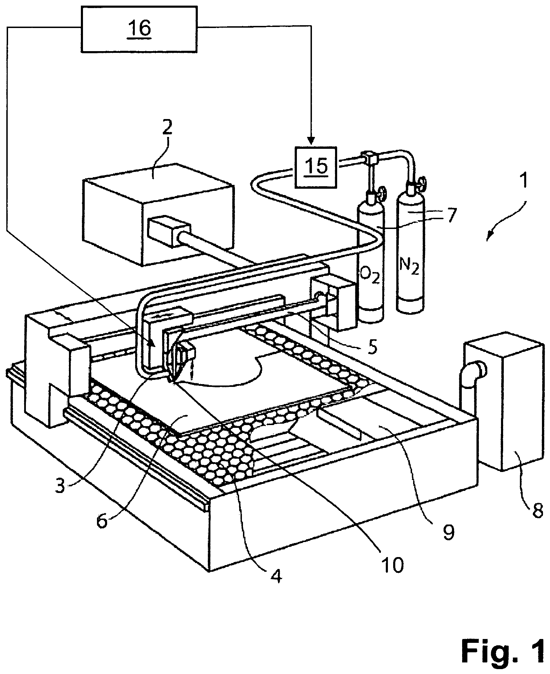

In **Fig. 1** ist perspektivisch eine Bearbeitungsmaschine **1** dargestellt, welche den Aufbau einer Laserschneidmaschine als Ausführungsbeispiel einer Laserbearbeitungsmaschine zeigt. Weitere Ausführungsbeispiele sind zum Beispiel eine Laserschweißmaschine oder eine kombinierte Stanz-/Laserschneidmaschine. Diese Bearbeitungsmaschine 10 weist beispielsweise einen CO₂-Laser, Diodenlaser oder Festkörperlaser als Laserstrahlerzeuger **2,** einen verfahrbaren Laserbearbeitungskopf **3** und eine Werkstückauflage **4** auf. Im Laser 2 wird ein Laserstrahl **5** erzeugt, der mittels eines (nicht gezeigten) Lichtleitkabels oder (nicht gezeigten) Umlenkspiegeln vom Laser 2 zum Bearbeitungskopf 3 geführt wird. Auf der Werkstückauflage **4** ist ein Werkstück **6** angeordnet. Der Laserstrahl 5 wird mittels einer im Bearbeitungskopf 3 angeordneten Fokussieroptik auf das Werkstück 6 gerichtet. Die Bearbeitungsmaschine 1 wird darüber hinaus mit Prozessgasen **7,** beispielsweise Sauerstoff und Stickstoff, versorgt. Es können alternativ oder zusätzlich auch Druckluft oder anwendungsspezifische Gase vorgesehen sein. Die Verwendung der einzelnen Gase ist von dem Material des zu bearbeitenden Werkstücks 6 und von Qualitätsanforderungen an die Schnittkanten abhängig. Weiterhin ist eine Absaugeinrichtung **8** vorhanden, die mit einem Absaugkanal **9,** der sich unter der Werkstückauflage 4 befindet, verbunden ist. Das Prozessgas 7 wird einer Prozessgasdüse **10** des Bearbeitungskopfes 3 zugeführt, aus der es zusammen mit dem Laserstrahl 5 austritt.

Beim Schneiden des Werkstücks 6 unter Verwendung von Sauerstoff als Prozessgas wird das Material des Werkstücks 6 geschmolzen und größtenteils oxidiert. Bei der Verwendung von Inertgasen, wie zum Beispiel Stickstoff oder Argon, wird das Material lediglich geschmolzen. Die entstandenen Schmelzpartikel werden dann, gegebenenfalls zusammen mit den Eisenoxiden, ausgeblasen und zusammen mit dem Schneidgas über die Absaugkanal 9 durch die Absaugeinrichtung 8 abgesaugt.

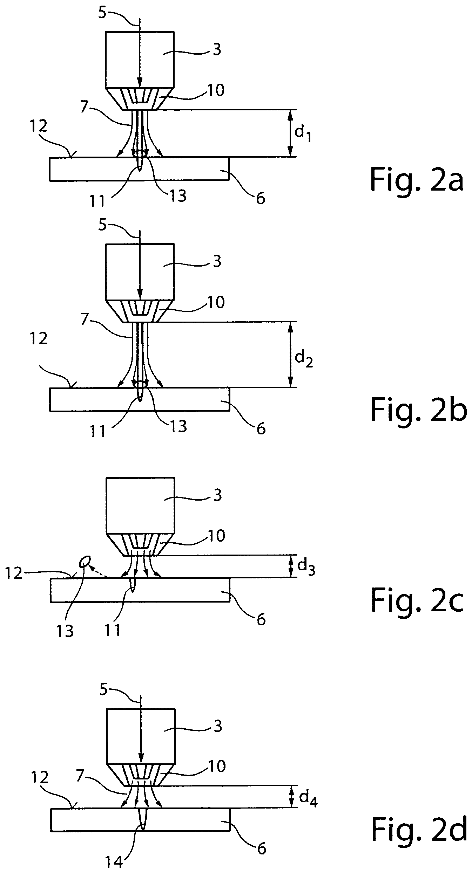

In Fign. 2a bis 2d sind die einzelnen Verfahrensschritte des erfindungsgemäßen Verfahrens zum Bilden eines Durchgangslochs in einem mehr als 10 mm dicken metallischen Werkstück 6 gezeigt.

In dem in **Fig. 2a** gezeigten ersten Verfahrensschritt erfolgt mit einem gepulsten oder kontinuierlichen Laserstrahl 5 und mit Sauerstoff als Prozessgas ein Einstichloch **11** in das Werkstück 6, das maximal bis zur Hälfte der Werkstückdicke reichen soll, also jedenfalls nicht vollständig durchgeht. Vorzugsweise liegt der Fokuspunkt des Laserstrahls 5 oberhalb der Werkstückoberfläche **12.** Der Abstand **d1** zwischen Prozessgasdüse 10 und Werkstückoberfläche 12 ist dabei größer gewählt als beim anschließenden Schneidprozess, um eine Verschmutzung der Prozessgasdüse 10 zu vermeiden. Durch Reaktion des geschmolzenen Werkstückmaterials mit Sauerstoff bildet sich ein vom Werkstück 6 relativ leicht zu lösender, oxidischer Schlackeaufwurf **13** um das Einstichloch 11, der nicht mit der Werkstückoberfläche 12 verschweißt ist.

In dem in **Fig. 2b** gezeigten optionalen zweiten Verfahrensschritt wird eine "Nachoxidation" des Schlackeaufwurfs 13 durch defokussierte Bestrahlung des Aufwurfs mit dem Laserstrahl 5 mit kleinerer Laserleistung als im ersten Verfahrensschritt durchgeführt. Dabei dient ebenfalls Sauerstoff als Prozessgas 7. In diesem zweiten Verfahrensschritt wird der Bearbeitungskopf 3 zur Defokussierung des Laserstrahls 5 fort von der Werkstückoberfläche 13 nach oben verfahren, so dass der Abstand **d2** zwischen Prozessgasdüse 10 und Werkstückoberfläche 12 größer als im ersten Verfahrensschritt ist (d2>d1). Der Schlackeaufwurf 13 wird durch diesen Zwischenschritt poröser, da eine Umwandlung von FeO-Anteilen in der Schlacke in Fe₂O₃ erfolgt. Es kann auch bereits ein teilweises Abplatzen des Aufwurfs 13 vom Werkstück 6 eintreten.

In dem in **Fig. 2c** gezeigten dritten Verfahrensschritt wird der Schlackeaufwurf 13 mit Stickstoff (oder einem anderen Inertgas) als Prozessgas 7 während einer Verfahrbewegung der Prozessgasdüse 10 vom Werkstück 6 geblasen. Der Gasdruck ist dabei deutlich höher als im ersten Verfahrensschritt, wobei die Druckerhöhung vom zweiten zum dritten Verfahrensschritt möglichst stoßartig erfolgt. Der Laserstrahl ist während der Verfahrbewegung der Prozessgasdüse 10 ausgeschaltet. Der Abstand **d3** zwischen Düse und Werkstückoberfläche möglichst klein eingestellt (d3<d1), um einen genügend hohen Gasimpuls auf den Aufwurf 13 zum Wegblasen des Aufwurfs 13 zu erzielen.

In dem in **Fig. 2d** gezeigten vierten Verfahrensschritt wird mit dem gepulsten Laserstrahl 5 und Stickstoff oder Sauerstoff als Prozessgas 7 (Druck z.B. 6 bar, und damit höher als im ersten Verfahrensschritt) das Einstichloch 11 vollständig durchgestochen und ein Durchgangsloch **14** ausgebildet. Der Abstand **d4** der Prozessgasdüse 10 zur Werkstückoberfläche 12 ist dabei kleiner als im ersten Verfahrensschritt, so dass der Fokuspunkt des Laserstrahls 5 im Werkstück 6 oder unterhalb des Werkstücks 6 liegt und eine gute Einkopplung des Prozessgases 7 in das Einstichloch 11 erfolgt. Der Bereich der Werkstückoberfläche 12 um das Durchgangsloch 14 herum weist keinen Aufwurf in Form von Schlacke oder anhaftender Schmelze auf. Wenn beim vierten Verfahrensschritt der Fokusdurchmesser des Laserstrahls 5 größer als beim ersten ist oder während des dritten Verfahrensschritts graduell vergrößert wird, kann gleichzeitig mit dem Durchstechen eine Erweiterung des Einstichlochs 11 erfolgen. Ausgehend vom Durchgangsloch 14 können anschließend Konturen mit kleinsten Abmessungen, wie z.B. schmale Langlöcher, in das Werkstück 6 geschnitten werden.

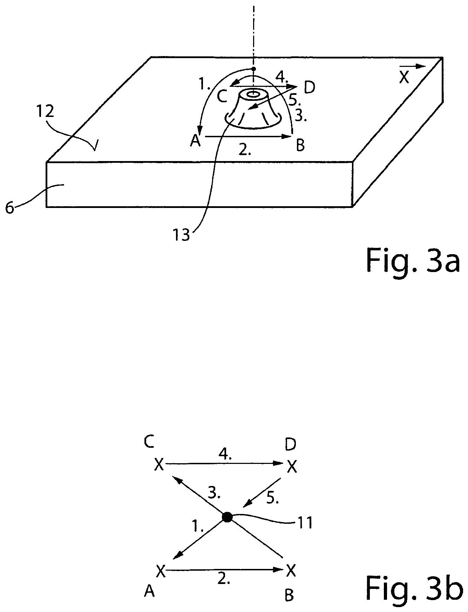

In **Fign. 3a, 3b** ist eine erfindungsgemäße Bewegungsabfolge der Prozessgasdüse 10 über das Einstichloch 11 gezeigt, um den Aufwurf 13 sicher zu entfernen.

Die Prozessgasdüse 10 bzw. der Laserbearbeitungskopf 3 wird vom Einstichloch 11 fort horizontal zu einem ersten Eckpunkt **A** verfahren (Pfeil 1). Bei dieser Verfahrbewegung oder an diesem ersten Eckpunkt A wird die Prozessgasdüse 10 abgesenkt und danach mit dem geringeren Abstand zum Werkstück 6 horizontal am Einstichloch 11 vorbei zu einem zweiten Eckpunkt **B** bewegt (Pfeil 2). Anschließend wird die Prozessgasdüse 10 wieder angehoben und über das Einstichloch 11 zu einem dritten Eckpunkt **C** verfahren (Pfeil 3), dessen X-Koordinate mit der X-Koordinate des ersten Eckpunkts A übereinstimmt. Am dritten Eckpunkt C wird die Prozessgasdüse 10 wieder abgesenkt. Das Anheben und Absenken der Prozessgasdüse 10 kann auch während der Verfahrbewegung erfolgen, so dass sich ein bogenförmiger Verlauf der Bewegung über das Einstichloch 11 hinweg ergibt. Vom dritten Eckpunkt C aus wird die Prozessgasdüse 10 parallel zur Werkstückoberfläche am Einstichloch 11 vorbei zu einem vierten Eckpunkt **D** verfahren (Pfeil 4), dessen X-Koordinate der X-Koordinate des zweiten Eckpunkts B entspricht. Von dort wird die Prozessgasdüse 10 zentral über das Einstichloch 11 bewegt (Pfeil 5), ohne dabei wieder angehoben zu werden. Auf diese Weise entsteht eine kreuzförmige Bewegungsfolge, bei der auf gegenüberliegenden Seiten des Einstichlochs 11 ein Bewegen der Prozessgasdüse 10 mit geringem Abstand zum Werkstück 6 am Einstichloch 11 vorbei erfolgt. Diese Bewegungsabfolge kann mehrmals wiederholt werden.

Bei dieser Bewegung trifft der Gasstrahl mit hohem Druck von der Seite her auf den Aufwurf 13, der dadurch von der Werkstückoberfläche 12 gelöst wird. Zusätzlich erfolgt - mit größerem Abstand der Prozessgasdüse 10 zum Werkstück 6, um Beschädigungen an der Prozessgasdüse 10 durch den Aufwurf 13 zu verhindern, - eine Bewegung der Prozessgasdüse 10 über den Aufwurf 13 hinweg, so dass auch eine Gaseinwirkung von oben stattfindet. Die Kombination aller drei Einwirkrichtungen ermöglicht ein prozesssicheres Entfernen des Aufwurfs 13. Ein eventuell noch vorhandener Aufwurfrest wird schließlich bei einer Verfahrbewegung der Prozessgasdüse 10 mit kleinem Düsenabstand zur Einstichlochmitte durch die Prozessgasdüse 10 von der Blechoberfläche 12 geschoben.

Wie in Fig. 1 gezeigt, umfasst die Laserbearbeitungsmaschine 1 ferner eine Einrichtung (z.B. einen Druckregler) **15** zum Einstellen des der Prozessgasdüse 10 zugeführten Prozessgasdrucks und eine Steuerung **16,** die programmiert ist, die Verfahrbewegung des Laserbearbeitungskopfes 3 samt seiner Prozessgasdüse 10 sowie den an der Einrichtung 15 eingestellten Prozessgasdruck gemäß dem oben beschriebenen Einstechverfahren zu steuern.

## Patentansprüche

1. Verfahren zum Bilden eines Durchgangslochs (14) in einem metallischen Werkstück (6) mittels eines Laserstrahls (5) und eines aus einer Prozessgasdüse (10) austretenden Prozessgases (7), insbesondere Sauerstoff oder Stickstoff, mit folgenden Schritten:
a) Ausbilden eines nicht durchgehenden Einstichlochs (11) im Werkstück (6) durch Einstechen des Laserstrahls (5) in das Werkstück (6) unter Zuströmung von Prozessgas (7);
b) Entfernen eines im Schritt a) um das Einstichloch (11) herum auf der Werkstückoberfläche (12) abgelagerten Aufwurfs (13) mittels des Prozessgases und/oder eines Inertgases, dessen Gasdruck höher als im Schritt a) ist, durch Bewegen der Prozessgasdüse (10) am Einstichloch (11) vorbei und/oder über das Einstichloch (11) hinweg bei ausgeschaltetem Laserstrahl (5); und
c) Durchstechen des Einstichlochs (11) mit dem Laserstrahl (5) und mit dem Prozessgas (7).

2. Verfahren nach Anspruch 1, **dadurch gekennzeichnet, dass** beim Schritt a) der Fokuspunkt des Laserstrahls (5) oberhalb der Werkstückoberfläche (12) liegt.

3. Verfahren nach Anspruch 1 oder 2, **dadurch gekennzeichnet, dass** beim Schritt c) der Fokuspunkt des Laserstrahls (5) im Werkstück (6) oder unterhalb des Werkstücks (6) liegt.

4. Verfahren nach einem der vorhergehenden Ansprüche, **dadurch gekennzeichnet, dass** der Abstand (d4) der Prozessgasdüse (10), aus der das Prozessgas (7) austritt, zur Werkstückoberfläche (12) beim Schritt c) kleiner als der Abstand (d1) beim Schritt a) ist.

5. Verfahren nach einem der vorhergehenden Ansprüche, **dadurch gekennzeichnet, dass** beim Schritt c) der Prozessgasdruck höher als beim Schritt a) ist und/oder der Fokusdurchmesser des Laserstrahls (5) größer als beim Schritt a) ist.

6. Verfahren nach einem der vorhergehenden Ansprüche, **dadurch gekennzeichnet, dass** beim Schritt c) der Fokusdurchmesser des Laserstrahls (5) in diskreten Stufen oder kontinuierlich vom Einstechdurchmesser auf den Schneidfokusdurchmesser vergrößert wird.

7. Verfahren nach einem der vorhergehenden Ansprüche, **dadurch gekennzeichnet, dass** die Druckerhöhung von Schritt a) zu Schritt b) stoßartig erfolgt.

8. Verfahren nach einem der vorhergehenden Ansprüche, **dadurch gekennzeichnet, dass** beim Schritt b) die Prozessgasdüse (10) kreuzförmig über das Einstichloch (11) bewegt wird und/oder in parallelen Bahnen beidseitig des Einstichlochs (11) am Einstichloch (10) vorbei bewegt wird.

9. Verfahren nach einem der vorhergehenden Ansprüche, **dadurch gekennzeichnet, dass** der Abstand (d3) der Prozessgasdüse (10) zur Werkstückoberfläche (12) bei einer Bewegung über das Einstichloch (11) größer ist als bei einer Bewegung am Einstichloch (11) vorbei.

10. Verfahren nach einem der vorhergehenden Ansprüche, **dadurch gekennzeichnet, dass** beim Schritt b) der Prozessgasdruck höher als beim Schritt c) ist.

11. Verfahren nach einem der vorhergehenden Ansprüche, **dadurch gekennzeichnet, dass** in einem vor Schritt b) durchgeführten Zwischenschritt der Aufwurf (13) mit dem Laserstrahl (5) mit kleinerer Laserleistung als im Verfahrensschritt a) und mit Sauerstoff als Prozessgas (7) bestrahlt wird.

12. Verfahren nach Anspruch 11, **dadurch gekennzeichnet, dass** der Laserstrahl (5) beim Zwischenschritt gegenüber dem Laserstrahl (5) beim Schritt a) defokussiert ist.

13. Verfahren nach Anspruch 12 oder 13, **dadurch gekennzeichnet, dass** im Zwischenschritt der Abstand (d2) zwischen Prozessgasdüse (10) und Werkstückoberfläche (12) größer als der Abstand (d1) im Verfahrensschritt a) ist.

14. Laserbearbeitungsmaschine (1) umfassend einen Laserstrahlerzeuger (2), einen verfahrbaren Laserbearbeitungskopf (3) mit einer Prozessgasdüse (10), aus der der Laserstrahl (5) zusammen mit dem Prozessgas (7) austritt, eine Einrichtung (15) zum Einstellen des Prozessgasdrucks und eine Steuerung (16), die programmiert ist, die Bewegung des Laserbearbeitungskopfes (3) und den eingestellten Prozessgasdruck der Einrichtung (15) gemäß dem Verfahren nach einem der vorhergehenden Ansprüche zu steuern.

15. Computerprogrammprodukt, welches Codemittel aufweist, die zum Durchführen aller Schritte des Verfahrens nach einem der Ansprüche 1 bis 13 angepasst sind, wenn das Programm auf einer Steuerung (16) einer Laserbearbeitungsmaschine (1) abläuft.

## Claims

1. Method for forming a through hole (14) in a metal workpiece (6) by means of a laser beam (5) and a process gas (7), in particular oxygen or nitrogen, emerging from a process gas nozzle (10), comprising the following steps:
a) forming a piercing hole (11) in the workpiece (6) that does not go all the way through by piercing the workpiece (6) by means of the laser beam (5) while process gas (7) flows in;
b) removing a bulge (13) deposited in step a) around the piercing hole (11) on the workpiece surface (12) by means of the process gas and/or an inert gas, whose gas pressure is higher than in step a), by movement of the process gas nozzle (10) past the piercing hole (11) and/or beyond the piercing hole (11) with the laser beam (5) switched off; and
c) fully piercing the piercing hole (11) by means of the laser beam (5) and the process gas (7).

2. Method according to claim 1, **characterized in that** the focal point of the laser beam (5) in step a) is located above the workpiece surface (12).

3. Method according to claim 1 or 2, **characterized in that** the focal point of the laser beam (5) in step c) is located in the workpiece (6) or underneath the workpiece (6).

4. Method according to anyone of the preceding claims, **characterized in that** the distance (d4) between the process gas nozzle (10) from which the process gas (7) emerges and the workpiece surface (12) in step c) is smaller than the distance (d1) in step a).

5. Method according to anyone of the preceding claims, **characterized in that** the pressure of the process gas in step c) is higher than in step a) and/or the focus diameter of the laser beam (5) in step c) is greater than in step a).

6. Method according to anyone of the preceding claims, **characterized in that** the focus diameter of the laser beam (5) in step c) is increased in discrete steps or continuously from the piercing diameter up to the focus diameter for cutting.

7. Method according to anyone of the preceding claims, **characterized in that** the increase in pressure from step a) to step b) is done abruptly.

8. Method according to anyone of the preceding claims, **characterized in that** in step b), the process gas nozzle (10) is moved cruciformly across the piercing hole (11) and/or in parallel paths at both sides of the piercing hole (11) past the piercing hole (11).

9. Method according to anyone of the preceding claims, **characterized in that** the distance (d3) between the process gas nozzle (10) and the workpiece surface (12) during a movement across the piercing hole (11) is greater than during a movement past the piercing hole (11).

10. Method according to anyone of the preceding claims, **characterized in that** the process gas pressure in step b) is higher than in step c).

11. Method according to anyone of the preceding claims, **characterized in that** in an intermediate step which is performed before step b) the bulge (13) is irradiated with a laser beam (5) of lower laser power than in step a) and with oxygen as process gas (7).

12. Method according to claim 11, **characterized in that** the laser beam (5) in the intermediate step is defocussed compared to the laser beam (5) in step a).

13. Method according to claim 11 or 12, **characterized in that** the distance (d2) between the process gas nozzle (10) and the workpiece surface (12) in the intermediate step is greater than the distance (d1) in step a).

14. Laser processing machine (1) comprising a laser beam generator (2), a movable laser machining head (3) with a process gas nozzle (10), from which the laser beam (5) together with the process gas (7) emerges, a device (15) for adjusting the process gas pressure and a control system (16) which is programmed to control the movement of the laser machining head (3) and the adjusted process gas pressure of the device (15) according to the method according to anyone of the preceding claims.

15. Computer program product which comprises code means adapted to execute all steps in the method according to anyone of the claims 1 to 13 when the program runs on a controller (16) of a laser processing machine (1).

## Revendications

1. Procédé pour former un trou traversant (14) dans une pièce métallique (6) au moyen d'un faisceau laser (5) et d'un gaz de processus (7) sortant d'une buse de gaz de processus (10), en particulier d'oxygène ou d'azote, présentant les étapes suivantes :
a) formation d'un trou de piqûre (11) non traversant dans la pièce (6) par piqûre du faisceau laser (5) dans la pièce (6) sous afflux de gaz de processus (7) ;
b) élimination d'une bavure (13) déposée à l'étape a) autour du trou de piqûre (11) sur la surface de pièce (12) au moyen du gaz de processus et/ou d'un gaz inerte dont la pression de gaz est plus élevée qu'à l'étape a), par déplacement de la buse de gaz de processus (10) le long du trou de piqûre (11) et/ou au-dessus du trou de piqûre (11) avec le faisceau laser (5) désactivé ; et
c) perforation du trou de piqûre (11) avec le faisceau laser (5) et avec le gaz de processus (7).

2. Procédé selon la revendication 1, **caractérisé en ce qu'**à l'étape a) le point de focalisation du faisceau laser (5) se situe au-dessus de la surface de pièce (12).

3. Procédé selon la revendication 1 ou 2, **caractérisé en ce qu'**à l'étape c), le point de focalisation du faisceau laser (5) se situe dans la pièce (6) ou au-dessous de la pièce (6).

4. Procédé selon l'une des revendications précédentes, **caractérisé en ce que** la distance (d4) de la buse de gaz de processus (10), dont sort le gaz de processus (7), par rapport à la surface de pièce (12) est plus petite à l'étape c) que la distance (d1) à l'étape a).

5. Procédé selon l'une des revendications précédentes, **caractérisé en ce qu'**à l'étape c), la pression de gaz de processus est plus élevée qu'à l'étape a) et/ou que le diamètre de focalisation du faisceau laser (5) est plus grand qu'à l'étape a).

6. Procédé selon l'une des revendications précédentes, **caractérisé en ce qu'**à l'étape c), le diamètre de focalisation du faisceau laser (5) est agrandi par paliers discrets ou de façon continue du diamètre de piqûre au diamètre de foyer de coupe.

7. Procédé selon l'une des revendications précédentes, **caractérisé en ce que** l'augmentation de pression de l'étape a) à l'étape b) a lieu de façon brusque ou par à-coups.

8. Procédé selon l'une des revendications précédentes, **caractérisé en ce qu'**à l'étape b), la buse de gaz de processus (10) est déplacée en croix au-dessus du trou de piqûre (11) et/ou en passages parallèles des deux côtés du trou de piqûre (11) le long du trou de piqûre (10).

9. Procédé selon l'une des revendications précédentes, **caractérisé en ce que** la distance (d3) de la buse de gaz de processus (10) par rapport à la surface de pièce (12) lors d'un déplacement au-dessus du trou de piqûre (11) est plus grande que lors d'un déplacement le long du trou de piqûre (11).

10. Procédé selon l'une des revendications précédentes, **caractérisé en ce qu'**à l'étape b), la pression de gaz de processus est plus élevée qu'à l'étape c).

11. Procédé selon l'une des revendications précédentes, **caractérisé en ce que** dans une étape intermédiaire exécutée avant l'étape b), la bavure (13) est exposée au faisceau laser (5) avec une plus faible puissance laser qu'à l'étape de procédé a) et à de l'oxygène comme gaz de processus (7).

12. Procédé selon la revendication 11, **caractérisé en ce qu'**à l'étape intermédiaire, le faisceau laser (5) est défocalisé par rapport au faisceau laser (5) à l'étape a).

13. Procédé selon la revendication 12 ou 13, **caractérisé en ce qu'**à l'étape intermédiaire, la distance (d2) entre la buse de gaz de processus (10) et la surface de pièce (12) est plus grande que la distance (d1) à l'étape de procédé a).

14. Machine d'usinage au laser (1) comprenant un générateur de faisceau laser (2), une tête d'usinage au laser (3) déplaçable dotée d'une buse de gaz de processus (10), de laquelle le faisceau laser (5) sort en même temps que le gaz de processus (7), un dispositif (15) pour régler la pression de gaz de processus et une commande (16) qui est programmée pour commander le déplacement de la tête d'usinage au laser (3) et la pression de gaz de processus réglée du dispositif (15) conformément au procédé selon l'une des revendications précédentes.

15. Produit-programme informatique qui présente des moyens de codage qui sont adaptés pour exécuter toutes les étapes du procédé selon l'une des revendications 1 à 13 lorsque le programme est exécuté ou tourne sur une commande (16) d'une machine d'usinage au laser (1).
